# EUROPEAN PATENT APPLICATION

(11) **EP 4 496 279 A1**
(43) Date of publication of application: **22.01.2025**
(21) Application number: 23770389.7
(22) Date of filing: 28.02.2023
(51) Int. Cl.: H04L 41/0806, H04L 41/0823

(54) **INFORMATION PROCESSING DEVICE, AND COMMUNICATION SYSTEM**

(30) Priority: 15.03.2022 JP 2022040282
(71) Applicant: Kabushiki Kaisha Toshiba, Tokyo 105-0023 (JP); TOSHIBA INFRASTRUCTURE SYSTEMS & SOLUTIONS CORPORATION, Saiwai-ku Kawasaki-shi Kanagawa 212-0013 (JP)
(72) Inventor: HATANAKA, Issei, Kawasaki-shi, Kanagawa 212-0013 (JP)
(74) Representative: Horn Kleimann Waitzhofer Schmid-Dreyer Patent- und Rechtsanwälte PartG mbB
(86) International application number: PCT/JP2023/007300
(87) International publication number: WO 2023/176431

(57) **Abstract**

An object is to provide an information processing apparatus and a communication system that are capable of observing communication settings. According to an embodiment, an information processing apparatus is connected between a terminal device and a server apparatus that communicates with the terminal device via a network. The information processing apparatus includes a first communication unit, a second communication unit, and a control unit. The first communication unit is connected to a server apparatus via the network. The second communication unit is connected to the terminal device. The control unit is linked up to a communication management apparatus by the first communication unit, and is linked up to a terminal device by the second communication unit, after communication settings based on communication setting information, which indicates whether or not the terminal device can communicate with another terminal device, are completed.

## Description

Embodiments of the present invention relate to an information processing apparatus and a communication system.

### BACKGROUND

In recent years, a system has been proposed that connects various devices to a network by utilizing IoT technology. For example, a communication system has been proposed in which various operation data obtained during operations and inspections are collected in a factory, a power plant, a railroad or the like, and analyzed by AI (artificial intelligence), and preventive maintenance for detecting signs of malfunctions in advance and efficient operation of facilities are realized.

In order to newly construct such a communication system, various data has to be collected via a network, and therefore a system operated in an existing original network may have to be connected to an open network. In a case where the system operated in the existing original network is connected to the open network, unauthorized access has to be prevented, so that it is conceivable to strengthen security by incorporating security measures into a device to be newly connected to the open network. However, making changes to already-operating existing devices is often impractical in terms of cost and availability, as it may necessitate device replacement.

Conventionally, to ensure the confidentiality and integrity of a communication path without making modifications to the existing device, an information processing apparatus to be connected between the existing device and the network has been developed. Such an information processing apparatus has a function of detecting an attack or a virus infection on a device by observing behaviors of communications in the device, and of blocking communications of an attacker upon detection of the attack or virus infection.

However, since the conventional information processing apparatus is designed with importance being placed on the availability of existing devices and systems, all communication ports of the information processing apparatus are linked up until the communication permission setting is reflected at the time of start-up. That is, the conventional information processing apparatus has problems in that there is a possibility that all communication ports are linked up without the communication permission setting being reflected at the time of start-up or the like and communications will be enabled through a communication path for which communications are not permitted. Therefore, an information processing apparatus and a communication system are desired that can realize a perfect security measure while ensuring the availability of the entire system.

### CITATION LIST

### PATENT LITERATURE

Patent Document 1: Jpn. Pat. Appln. KOKAI Publication No. 2019-50485

### SUMMARY

### TECHNICAL PROBLEM

An object of the present invention is to provide an information processing apparatus and a communication system that can observe communication settings.

### SOLUTION TO PROBLEM

According to an embodiment, an information processing apparatus is connected between a terminal device and a server apparatus that communicates with the terminal device via a network. The information processing apparatus includes a first communication unit, a second communication unit, and a control unit. The first communication unit is connected to the server apparatus via the network. The second communication unit is connected to the terminal device. The control unit is linked up to a communication management apparatus by the first communication unit, and is linked up to the terminal device by the second communication unit after communication settings based on communication setting information, which indicates whether or not the terminal device can communicate with another terminal device, are completed.

### BRIEF DESCRIPTION OF THE DRAWING(S)

FIG. 1 is a diagram showing a configuration example of a communication system according to an embodiment.
FIG. 2 is a block diagram showing a configuration example of an information processing apparatus of the communication system of the embodiment.
FIG. 3 is a block diagram showing a configuration example of an IC card to be inserted into the information processing apparatus of the embodiment.
FIG. 4 is a diagram showing a hardware configuration example of an IC card, which is an example of a functional configuration of the IC card to be inserted into the information processing apparatus of the embodiment.
FIG. 5 is a block diagram showing an example of a functional configuration of a C card, which is a configuration example of an authentication unit employed in a communication control device of the embodiment.
FIG. 6 is a sequence diagram for illustrating a flow of how communication control is performed between an IoT device (terminal device) and a server apparatus in the communication system of the embodiment.
FIG. 7 is a flowchart for illustrating how a device-side information processing apparatus performs a first communication setting process in the communication system of the embodiment.
FIG. 8 is a flowchart for illustrating how the device-side information processing apparatus performs a second communication setting process in the communication system of the embodiment.
FIG. 9 is a flowchart for illustrating how the device-side information processing apparatus performs a third communication setting process in the communication system of the embodiment.
FIG. 10 is a flowchart for illustrating how the device-side information processing apparatus performs a fourth communication setting process in the communication system of the embodiment.

### DETAILED DESCRIPTION

A description will now be given of embodiments with reference to the accompanying drawings.

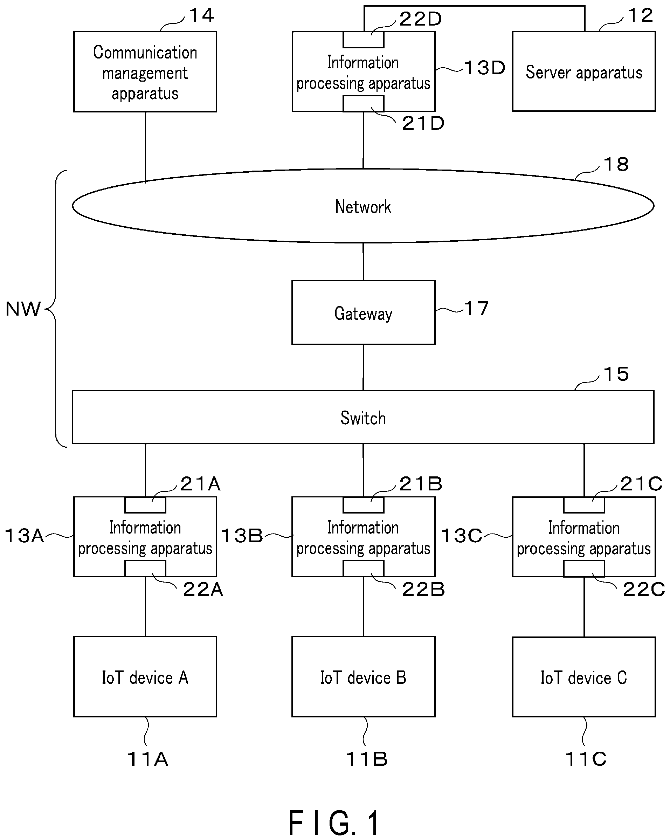

FIG. 1 is a diagram showing a configuration example of a communication system including an information processing apparatus 13 according to the embodiment.

A communication system 1 includes IoT devices (terminal devices) 11 (11A, 11B, 11C), a server apparatus 12, information processing apparatuses 13 (13A, 13B, 13C, 13D), a communication management apparatus 14, a switch 15, and a gateway 17. In the configuration example shown in FIG. 1, the switch 15, the gateway 17 and the network 18 are collectively referred to as a network NW.

In the communication system 1, it is assumed that each information processing apparatus 13 is connected to an existing communication system. That is, each information processing apparatus 13 is connected to such positions as shown in FIG. 1, in an existing system including IoT devices 11 (11A, 11B, 11C), a server apparatus 12, a communication management apparatus 14, a switch 15 and a gateway 17.

Each information processing apparatus 13 is installed in such a manner as to construct the communication system 1 while maintaining the availability of the existing system without making modifications to the configuration of each apparatus. As shown in FIG. 1, the information processing apparatus 13 includes a first port (e.g., a first LAN port) 21 and a second port (e.g., a second LAN port) 22 which are for connection to communication paths in an existing system. For example, the information processing apparatus 13A is connected between the IoT device 21A and the switch 15 by connecting the first port 22A to the switch 15 and connecting the second port 11A to the IoT device 11A.

The IoT devices 11A, 11B, and 11C are connected to the network NW via the device-side information processing apparatuses 13A, 13B and 13C, respectively. The server apparatus 12 is connected to the network NW via the server-side information processing apparatus 13D. That is, each of the IoT devices 11A, 11B, and 11C and the server apparatus 12 are configured to communicate with each other via the respectively-connected information processing apparatuses 13, the network NW, etc.

Each IoT device 11 is a device (a terminal device or a client terminal) that acquires various data. For example, the IoT device 11 may be a device that acquires data by a sensor or the like, or may be a device that acquires data input by an operator. The IoT device 11 transmits acquired data to the server apparatus 12. The IoT device 11 may have a function of controlling an operation in accordance with control information of the server apparatus 12.

The server apparatus 12 collects data acquired by the IoT devices 11. For example, the server apparatus 12 manages and analyzes data collected from the IoT devices 11. The server apparatus 12 may transmit control information to the IoT devices 11.

The device-side information processing apparatuses 13A, 13B, and 13C are connected between the IoT devices 11A, 11B, and 11C and the switch 15 of the network NW. The device-side information processing apparatuses 13A, 13B, and 13C have first ports 21A, 21B and 21C serving as interface connection units on the network NW side, and second ports 22A, 22B and 22C serving as device-side interface connection units. The first ports 21A, 21B and 21C and the second ports 22A, 22B and 22C are, for example, LAN ports. In the configuration example shown in FIG. 1, the switch 15 is connected to the first ports 21A, 21B and 21C, and the IoT devices 22A, 22B and 22C are connected to the second ports 11A, 11B and 11C, respectively.

The device-side information processing apparatuses 13A, 13B and 13C mediate communications between the IoT devices 11A, 11B and 11C and the server apparatus 12. The information processing apparatuses 13A, 13B and 13C acquire data transmitted to the server apparatus 12 from the IoT devices 11A, 11B and 11C, and output the acquired data to the server apparatus 12. The information processing apparatuses 13A, 13B and 13C encrypt the data acquired from the IoT devices 11A, 11B, and 11C, and transmit the encrypted data to the server apparatus 12.

The information processing apparatuses 13A, 13B and 13C acquire data transmitted to the IoT devices 11A, 11B and 11C from the server apparatus 12, and output the acquired data to the IoT devices 11A, 11B and 11C. The data acquired by the information processing apparatuses 13A, 13B and 13C is encrypted data. In a case where the information processing apparatuses 13A, 13B and 13C output data to the IoT devices 11A, 11B and 11C, data acquired from the server apparatus 12 by way of the server-side information processing apparatus 13D is decrypted, and the decrypted data is output to the IoT devices 11A, 11B and 11C.

The device-side information processing apparatuses 13A, 13B and 13C are configured such that they can communicate with other device-side information processing apparatuses 13A, 13B and 13C via the switch 15. Each of the device-side information processing apparatuses 13A, 13B and 13C is set such that whether or not it is communicable with other device-side information processing apparatuses 13A, 13B and 13C can be determined according to the communication permission setting set to each of them.

The server-side information processing apparatus 13D is connected between the server apparatus 12 and the network NW. The server-side information processing apparatus 13D has a first port 21D serving as an interface connection unit on the network NW side and a second port 22D serving as a server-side interface connection unit. The network 18 is connected to the first port 21D, and the server apparatus 12 is connected to the second port 22D.

The server-side information processing apparatus 13D mediates communications between the IoT devices 11 and the server apparatus 12. To transmit data to the IoT devices 11, the server-side information processing apparatus 13D encrypts data acquired from the server apparatus 12 and transmits the encrypted data to the IoT devices 11.

The server-side information processing apparatus acquires data transmitted to the server 12 from the IoT devices 11 and outputs the acquired data to the server apparatus 12. The data acquired by the server-side information processing apparatus 13D is encrypted data. In a case where server-side information processing apparatus 13D outputs data to the server apparatus 12, data acquired from the IoT devices 11 by way of the device-side information processing apparatuses 13A, 13B and 13C is decrypted, and the decrypted data is output to the server apparatus 12.

Each of the information processing apparatuses 13 (13A, 13B, 13C, 13D) performs encryption, for example, by an SSL/TLS protocol (Secure Socket Layer/Transport Layer Security protocol). The device-side information processing apparatuses 13A, 13B and 13C and server-side the information processing apparatus 13D combine, for example, the SSL/TLS protocol with an HTTP to encrypt data included in the HTTP and use an HTTPS (HTTP Secure) with enhanced safety.

The data encryption performed by the device-side information processing apparatuses 13A, 13B and 13C and the server-side the information processing apparatus 13D is not limited to the encryption in which the HTTP is replaced with the HTTPS. The information processing apparatuses 13 and the server-side information processing apparatus 13D may combine the SSL/TLS protocol with various communication protocols and use the resultant secure communication protocols with enhanced safety. For example, the device-side information processing apparatuses 13A, 13B and 13C and the server-side information processing apparatus 13D may replace an FTP (File Transfer Protocol) with an FTPS (FTP Secure).

In the communication system 1, data encrypted either by the device-side information processing apparatuses 13A, 13B and 13C or by the server-side information processing apparatus 13D is output to the network NW. In other words, data flowing through the network NW in the communication system 1 is encrypted data. Therefore, data transmitted and received on the network NW is prevented from being externally accessed and tapped with malicious intention, and safety is thus enhanced. The "tapping of data" used herein refers to either "sneaking a look at data" or "extracting data."

The communication management apparatus 14 is a server apparatus for managing communications using the device-side information processing apparatuses 13A, 13B and 13C and the server-side information processing apparatus 13D. For example, the communication management apparatus 14 functions as a private certificate authority as well. The communication management apparatus 14 issues a client certificate and a private key to each of the information processing apparatuses 13.

In the configuration example shown in FIG. 1, the communication management apparatus 14 issues client certificates and private keys that are to be stored in IC cards attached to the information processing apparatuses 13. In a case where IC cards having an authentication unit and a secure storage unit are attached to the device-side information processing apparatuses 13A, 13B and 13C, the communication management apparatus 14 transmits client certificates and private keys to be stored in the IC cards to the information processing apparatuses 13A, 13B and 13C via the network NW.

The communication management apparatus 14 issues a server certificate and a private key to the server-side information processing apparatus 13D. In a case where an IC card including an authentication unit and a secure storage unit is attached to the server-side information processing apparatus 13D, the communication management apparatus 14 transmits a server certificate and a private key to be stored in the IC card to the server-side information processing apparatus 13D via the network NW. The client certificates, the server certificate and the private keys are information necessary for determining a common key (session key) used in the encrypted communications performed between the device-side information processing apparatuses 13A, 13B and 13C and the server-side information processing apparatus 13D.

A description will now be given of examples of the IoT devices 11 and the server apparatus 12.

The IoT devices 11 and the server apparatus 12, for example, serve as constituent elements (components) forming a social infrastructure system. The social infrastructure refers to facilities necessary for establishing social foundations, such as road transportation networks, power generation facilities, electricity distribution networks, water treatment facilities, gas distribution facilities, or the like. The social infrastructure system is a mechanism for stably operating the social infrastructure, for example, by monitoring the social infrastructure, grasping changes in the situation, and coping with the changes.

For example, in a monitoring system that monitors roads, public facilities or the like via video, the IoT device 11 is a device (network monitoring camera) that transmits image data captured for monitoring a road situation or the like via the network NW. Meanwhile, the server apparatus 12 is an apparatus that receives the captured image data transmitted by the IoT device 11 via the network NW. The IoT device 11 and the server apparatus 12 may be components of a system that monitors the power status of a power generation facility or an electricity distribution facility. The IoT device 11 and the server apparatus 12 may be components of a system that acquires a delivery status of a distribution center. The IoT device 11 and the server apparatus 12 may be components of a system that acquires a facility operation status of a factory or a research institution.

A social infrastructure system, such as a surveillance system or a monitoring system, is just an example of a communication system that includes the IoT device 11 and the server apparatus 12 as components, and the IoT device 11 and the server apparatus 12 are not limited to components of the social infrastructure system.

The IoT device 11 includes a network (NW) communication unit, a device control unit, and a data acquisition unit. The NW communication unit is a communication interface for performing data communications. The NW communication unit is a communication interface, such as Ethernet (registered trademark), that enables communications with an external apparatus via a network. In other words, the IoT device 11 is a device having a configuration capable of communicating with an apparatus connected to the network by the NW communication unit.

In the communication system 1 according to the present embodiment, the NW communication unit of the IoT device 11 is connected to the information processing apparatus 13 and communicates with the server apparatus 12 connected to the network NW via the information processing apparatus 13. That is, the communication system 1 according to the present embodiment is a system that is applicable to an existing system, in which the IoT devices 11 and the server apparatus 12 are configured to communicate with each other via the network, and that can be constructed in a post-installation manner by connecting the information processing apparatuses 13A, 13B and 13C between the IoT devices 11 and the network NW and by providing an information processing apparatus 13D between the server apparatus 12 and the network NW.

The device control unit is, for example, a processor including a CPU or the like, and comprehensively controls the IoT devices 11. The device control unit starts or stops the data acquisition of the data acquisition unit or executes operation setting for the data acquisition unit, for example, under the control of the server apparatus 12. The data acquisition unit operates in accordance with an instruction from the device control unit, and acquires data and outputs the acquired data to the control unit. The device control unit transmits (outputs) the data acquired by the data acquisition unit from the NW communication unit.

In the communication system 1 according to the present embodiment, the NW communication unit of the IoT device 11 is connected to the information processing apparatus 13. Therefore, each IoT device 11 inputs and outputs data via the information processing apparatus 13. For example, the IoT device 11A communicate with the server apparatus 12 via the device-side information processing apparatus 13A, the network NW, and the server-side information processing apparatus 13D.

In the communication system 1 according to the present embodiment, each IoT device 11 can be set such that it is communicable with another IoT device 11 with more trouble than with the gateway 17. That is, each IoT device 11 can be set such that it is communicable with other IoT devices via the information processing apparatus connected thereto, the switch 15, and the information processing apparatus connected to other IoT devices. For example, the IoT device 11A can be set such that it is communicable with the IoT devices 11B via the information processing apparatus 13A, the switch 15, and the information processing apparatus 13B. Each of the device-side information processing apparatuses 13A, 13B and 13C is set such that whether it is communicable with the IoT devices can be determined according to the communication permission setting.

The server apparatus 12 includes a network (NW) communication unit, a server control unit, a data storage unit, and the like. The NW communication unit is a communication interface for performing data communications. The NW communication unit is a communication interface, such as Ethernet (registered trademark), that enables communications with an external apparatus via a network. In other words, the server apparatus 12 is an apparatus having a configuration capable of communicating with an apparatus connected to the network by the NW communication unit.

In the communication system 1 according to the present embodiment, the NW communication unit of the server apparatus 12 is connected to the information processing apparatus 13D and communicates with a device connected to the network NW via the information processing apparatus 13D. That is, the communication system 1 according to the present embodiment is a system that is applicable to an existing system, in which the IoT devices 11 and the server apparatus 12 are configured to communicate with each other via the network, and that can be constructed in a post-installation manner by providing an information processing apparatus 13D between the server apparatus 12 and the network NW.

The server control unit is, for example, a processor including a CPU or the like, and comprehensively controls the server apparatus. For example, the server control unit acquires data from each IoT device 11 by the NW communication unit, and stores the data acquired from the IoT device 11 in the data storage unit. The data storage unit stores data acquired from the IoT devices 11 in accordance with an instruction supplied from the server control unit. The server control unit outputs a control command, such as an operation instruction, to each of the IoT devices 11 that are communicable to each other with the NW communication unit.

Next, a description will be given of how communications are performed between the IoT devices 11 and the server apparatus 12.

In general, in a case where an IoT device (a client terminal, a communication device) having a communication function and a server apparatus are connected to each other via their NW communication units and a network, HTTP, which is a general communication protocol, may be used for communications between the IoT device and the server apparatus. In this case, unencrypted information (so-called plain text) output to the network by the communication device or the server apparatus flows through the network. If data on the network is externally acquired with malicious intention, there is a risk that the data is easily tapped or tampered. As a countermeasure against such an unauthorized attack, it is thought that the communication device encrypts data and outputs the encrypted data to the network.

In many cases, however, existing IoT devices (client terminals) used in existing systems do not have resources for performing such encryption processing. For example, a monitoring camera, which is an example of an IoT device, includes a processor, such as a CPU, for compressing or encoding captured image data, but does not include a resource for performing encryption processing in many cases. Therefore, in order to encrypt data output from the IoT device to the network, the IoT device of the existing system must be equipped with a further processor for encrypting data, so that the hardware configuration of the IoT device may have to be changed or replaced. In an existing IoT device used as a component constituting a social infrastructure system, such as a monitoring system, the hardware configuration cannot be easily changed or replaced.

In view of the foregoing circumstances, a communication system is desired which can be configured such that data from an IoT device is encrypted and transmitted to a network NW without modifying an existing IoT device. The communication system 1 according to the present embodiment can safely transmit data by connecting an information processing apparatus to an existing IoT device and a server apparatus, without changing the hardware configuration of the existing IoT device of an existing system or replacing the existing IoT device with a new IoT device.

That is, in the communication system 1, the information processing apparatus 13 connected between the IoT device 11 and the network NW encrypts data to be transmitted from the IoT device 11 to the server apparatus 12 and outputs the encrypted data to the network NW. Moreover, in the communication system 1, the server-side information processing apparatus 13D connected between the server apparatus 12 and the network NW encrypts data, such as control data, transmitted from the server apparatus 12 to the IoT devices 11 and outputs the encrypted data to the network NW. Thus, the communication system 1 of the present embodiment is advantageous in that the safety of data flowing through the network NW can be improved without modifying the IoT device 11 or the server apparatus 12.

In the communication system 1 shown in FIG. 1, the switch 15 connected to the network 18 via the gateway 17 constitutes a local system that enables communications among the IoT devices 13A, 13B, and 13C via the device-side information processing apparatuses 11A, 11B and 11C. That is, the communication system 1 has a configuration in which the IoT devices 11A, 11B, and 11C can communicate with each other via the switch 15 and the device-side information processing apparatuses 13A, 13B and 13C. The communications among the IoT devices 11A, 11B and 11C via the switch 15 are controlled by the information processing apparatuses 13A, 13B and 13C.

For example, in a case where the communications between the IoT device 11A and the IoT device 11B are disabled, the communication settings including the setting for disabling the communications between the IoT device 11A and the IoT device 11B (communication permission setting) is applied to the information processing apparatuses 13A and 13B. The information processing apparatuses 13A, 13B and 13C according to the present embodiment first confirm that the communication permission setting is applied, and then perform communications among the IoT devices 11A, 11B, and 11C via the switch 15.

In other words, in a state where the communication permission setting is reflected (applied), the information processing apparatuses 13A, 13B and 13C permit communications among the IoT devices 11A, 11B, and 11C via the switch 15. In a state where the communication permission setting is not reflected, the information processing apparatuses 13A, 13B and 13C do not permit communications among the IoT devices 11A, 11B and 11C via the switch 15. Thus, each information processing apparatus 13 can observe the communication setting, and can prevent communications from being permitted among the IoT devices 11 if such communications are disabled in the communication permission setting in the start-up process.

Next, a description will be given of the configuration of the information processing apparatus 13 (13A, 13B, 13C, 13D) of the embodiment.

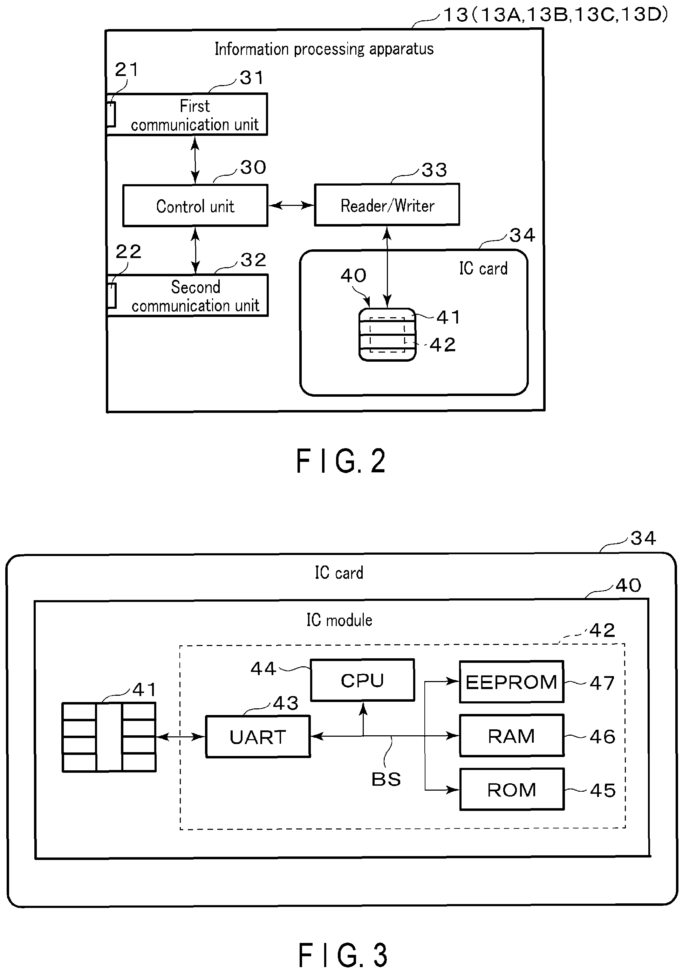

FIG. 2 is a block diagram showing a configuration example of the information processing apparatus 13 (13A, 13B, 13C, 13D) shown in FIG. 1.

As shown in FIG. 2, the information processing apparatus 13 (13A, 13B, 13C, 13D) includes a control unit 30, a first communication unit 31, a second communication unit 32, a reader/writer 33, and an IC card 34. The reader/writer 33 and the IC card 34 are an example of an "authentication unit." The authentication unit is not limited to the one realized by the reader/writer 33 and the IC card 34. The authentication unit may be realized by the control unit 30 or by a processing circuit for authentication processing.

The control unit 30 is, for example, a processor including a CPU or the like, and comprehensively controls the information processing apparatus 13 (13A, 13B, 13C, 13D). For example, the control unit 30 transmits a command to the IC card 34 via the reader/writer 33 and receives a response from the IC card 34. The control unit 30 transmits information based on the response received from the IC card 34 to other information processing apparatuses 13 (13A, 13B, 13C, 13D) via the first communication unit 31. The control unit 30 transmits a command to the IC card 34 via the first communication unit 31, based on information received from other information processing apparatuses 13 (13A, 13B, 13C, 13D).

The first communication unit 31 includes a first port 21 (21A, 21B, 21C) connected to the network NW. The first communication unit 31 communicates with other information processing apparatuses 13 (13A, 13B, 13C, 13D) via the network NW. Specifically, the first communication units 31 of the device-side information processing apparatuses 13A, 13B and 13C acquire data from the switch 15 connected to the first ports 21A, 21B, and 21C, encrypt data addressed to the server apparatus 12, and output the encrypted data to the gateway 17 via the switch 15. The first communication unit 31 of the server-side information processing apparatus 13D acquires encrypted data from the network 18 connected to the first port 21D, decrypts the acquired data, and outputs the decrypted data to the server apparatus 12.

The second communication unit 32 includes a second port 22 (22A, 22B, 22C) connected to an apparatus (either the IoT device 11 or the server apparatus 12) that performs communications. The second communication unit 32 communicates with the IoT device 11 or the server apparatus 12. To be more specific, the second communication units 32 of the device-side information processing apparatuses 13A, 13B and 13C acquire captured image data from the IoT devices 11 connected to the second ports 22A, 22B and 22C, and output decrypted control data to the IoT devices 11. The second communication unit 32 of the server-side information processing apparatus 13D acquires control data from the server apparatus 12 connected to the second port 22D, and outputs decrypted image data to the server apparatus 12.

According to the configuration of the present embodiment, the device-side information processing apparatuses 13A, 13B and 13C can communicate with other device-side information processing apparatuses via the switch 15. Each of the device-side information processing apparatuses 13A, 13B, and 13C is set such that whether or not it is communicable with other device-side information processing apparatuses 13A, 13B, and 13C can be determined according to the communication permission setting. The information processing apparatus 13 according to the present embodiment first confirms that the setting of communication permission (security mode) is enabled, and then allows communications between the IoT device 11 and the second communication unit 32 (link up).

That is, the first communication unit 31 is linked to communicate with the communication management apparatus 14 via the first port 21A (21B, 21C). After the first communication unit 31 is linked up to the communication management apparatus 14 via the first port 21A (21B, 21C) and the setting of the communication permission in the information processing apparatus 13A (13B, 13C) is confirmed to be valid, the second communication unit 32 is linked up to the IoT device 11A (11B, 11C) via the second port 22A (22B, 22C).

The reader/writer 33 communicates with the IC card 34. The reader/writer 33 includes an interface corresponding to the communication method of the IC card 34. In a case where the IC card 34 is a contact type IC card, the reader/writer 33 includes an interface to be connected to a contact unit of the IC card 34, as shown in FIG. 2, and transmits and receives data via the interface.

The IC card 34 is formed, for example, by mounting an IC module 40 on a plastic card base member. The IC card 34 includes an IC module 40 and a card base member (main body) in which the IC module 40 is embedded. In the configuration example shown in FIG. 2, the IC card 34 is configured such that it is detachably attached to the reader/writer 33 of the information processing apparatus 13 (13A, 13B, 13C, 13D). The IC card 34 communicates with the information processing apparatus 13 (13A, 13B, 13C, 13D) via a contact unit 41 in a state where it is attached to the reader/writer 33.

The IC card 34 receives, for example, a command (processing request) transmitted from the information processing apparatus 13 (13A, 13B, 13C, 13D) via the contact unit 41, and executes processing (command processing) corresponding to the received command. The IC card 34 transmits a response (a processing response), which is a result of the execution of the command processing, to the information processing apparatus 13 (13A, 13B, 13C, 13D) via the contact unit 41.

The IC module 40 includes a contact unit 41 and an IC chip 42. The contact unit 41 has terminals for receiving various signals necessary for the IC card 34 to operate. The terminals for various signals include a terminal for receiving a power supply voltage, a clock signal, a reset signal, etc. from the information processing apparatus 13 (13A, 13B, 13C, 13D), and a serial data input/output terminal (an SIO terminal) for communicating with the information processing apparatus 13 (13A, 13B, 13C, 13D). The IC chip 42 is, for example, a large scale integration (LSI), such as a one-chip microprocessor.

A description will now be given of a hardware configuration of the IC card 34, which is a configuration example of the authentication unit included in the information processing apparatus 13 of the embodiment.

FIG. 3 is a diagram showing an example of the hardware configuration of the IC card 34 depicted in FIG. 2.

The IC card 34 includes a contact unit 41, and an IC module 40 having an IC chip 42. As shown in FIG. 3, the IC chip 42 includes a UART (Universal Asynchronous Receiver Transmitter) 43, a CPU 44, a ROM (Read Only Memory) 45, a RAM (Random Access Memory) 46, and an EEPROM (registered trademark) (Electrically Erasable Programmable ROM) 47. These components (43 to 47) are connected to each other via an internal bus BS.

The UART 43 performs serial-data communications with the information processing apparatus 13 (13A, 13B, 13C, 13D) via the above-described SIO terminal. The UART 43 outputs, to the internal bus BS, data (e.g., one-byte data) obtained by parallel conversion of a serial data signal received via the SIO terminal. The UART 43 serially converts the data acquired via the internal bus BS and outputs the converted data to the information processing apparatus 13 (13A, 13B, 13C, 13D) via the SIO terminal. The UART 43 receives, for example, a command from the information processing apparatus 13 (13A, 13B, 13C, 13D) via the SIO terminal. Further, the UART 43 transmits a response to the information processing apparatus 13 (13A, 13B, 13C, 13D) via the SIO terminal.

The CPU 44 executes a program stored in the ROM 45 or the EEPROM 47 to perform various processes of the IC card 34. The CPU 44 executes, for example, command processing corresponding to a command which the UART 43 receives via the contact unit 41, for example.

The ROM 45 is a nonvolatile memory such as a mask ROM, and stores programs for executing various processes of the IC card 34, as well as data such as a command table. The RAM 46 is a volatile memory such as a static RAM (SRAM), and temporarily stores data used for performing various processes of the IC card 34. The EEPROM 47 is, for example, an electrically rewritable nonvolatile memory. The EEPROM 47 stores various kinds of data used by the IC card 34. The EEPROM 47 stores, for example, information for performing various services (applications) using the IC card 34.

Next, a description will be given of the function of the IC card 34, which is a configuration example of the authentication unit of the information processing apparatus 13 of the embodiment.

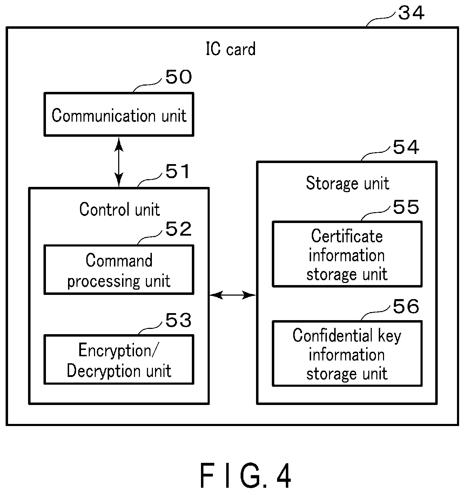

FIG. 4 is a block diagram showing an example of the functional configuration of the IC card 34 depicted in FIG. 3. The IC card 34 includes a communication unit 50, a control unit 51, and a storage unit 54. Each unit of the IC card 34 shown in FIG. 4 is realized by the hardware of the IC card 34 shown in FIG. 3.

The communication unit 50 transmits and receives commands and responses to and from the information processing apparatus 13 (13A, 13B, 13C, 13D) via the contact unit 41. The communication unit 50 is a functional unit that performs data transmission and reception, using the UART 43, by executing the program stored in the ROM 45. The communication unit 50 receives a command (processing request) for requesting a predetermined process from the information processing apparatus 13 (13A, 13B, 13C, 13D), and transmits a response (processing response) to the command to the information processing apparatus 13 (13A, 13B, 13C, 13D). The communication unit 50 causes the RAM 46 to store reception data received from the information processing apparatus 13 (13A, 13B, 13C, 13D) via the UART 43. The communication unit 50 transmits transmission data stored in the RAM 46 to the information processing apparatus 13 (13A, 13B, 13C, 13D) via the UART 43.

The control unit 51 controls the operation of the IC card 34. The control unit 51 is realized by the CPU 44, the RAM 45, and the ROM 46 or the EEPROM 47. The control unit 51 includes a command processing unit 52 and an encryption/decryption unit 53. The process performed by the command processing unit 52 is an example of an "authentication process." The process performed by the encryption/decryption unit 53 is an example of an "encryption/decryption process."

The command processing unit 52 executes various command processes. The command processing unit 52 performs, for example, SSL/TLS handshake as command processing for making an HTTPS request described later. In the SSL/TLS handshake, key information etc. necessary for encrypted communications are exchanged, and mutual authentication with a communication destination apparatus is performed. The mutual authentication is a process of mutually confirming that the device-side information processing apparatus 13A, 13B or 13C and the server-side information processing apparatus 13D are validly authenticated apparatuses before the start of communications.

The encryption/decryption unit 53 performs a process of encrypting data and a process of decrypting the encrypted data. The encryption/decryption unit 53 encrypts data output from the apparatus (the IoT device 11 or the server apparatus 12) and acquired via the communication unit 50. The encryption/decryption unit 53 decrypts encrypted data acquired from the network NW via the communication unit 50.

The storage unit 54 stores data. The storage unit 54 is implemented by the EEPROM 47 which performs data read and data write under the control of the control unit 51. The storage unit 54 includes a certificate information storage unit 55 and a confidential information storage unit 56. The certificate information storage unit 55 stores a certificate which the communication management apparatus 14 issues for an apparatus (the IoT device 11 or the server apparatus 12). Specifically, the certificate information storage unit 55 of the IC card 34 attached to the information processing apparatus 13 stores information indicating a client certificate. The certificate information storage unit 55 of the IC card 34 attached to the server-side information processing apparatus 13D stores information indicating a server certificate.

The confidential information storage unit 56 stores a private key which the communication management apparatus 14 issues to an apparatus (the IoT device 11 or the server apparatus 12). Specifically, the confidential information storage unit 56 of the IC card 34 attached to the information processing apparatus 13 stores information indicating a private key issued to the information processing apparatus 13. The certificate information storage unit 55 of the IC card 34 attached to the server-side information processing apparatus 13D stores information indicating a private key issued to the server-side information processing apparatus 13D.

Next, a description will be given of a configuration of the communication management apparatus 14 of the communication system 1 of the embodiment.

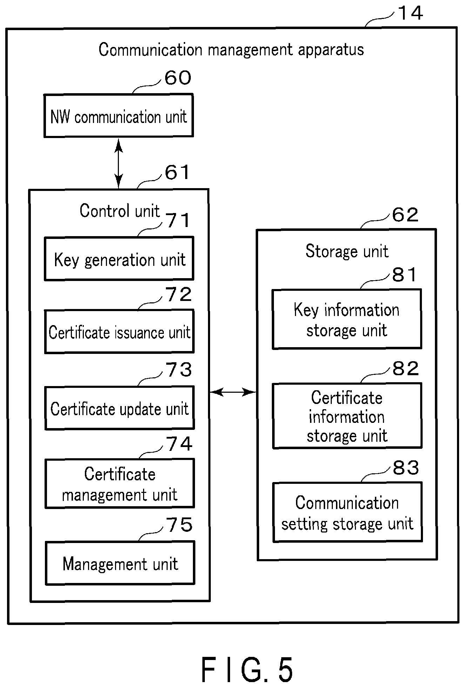

FIG. 5 is a block diagram showing an example of the configuration of the communication management apparatus 14 depicted in FIG. 1.

The communication management apparatus 14 includes an NW (network) communication unit 60, a control unit 61, and a storage unit 62.

The NW communication unit 60 is connected to the network NW and communicates with the information processing apparatus 13 (13A, 13B, 13C, 13D) via the network NW.

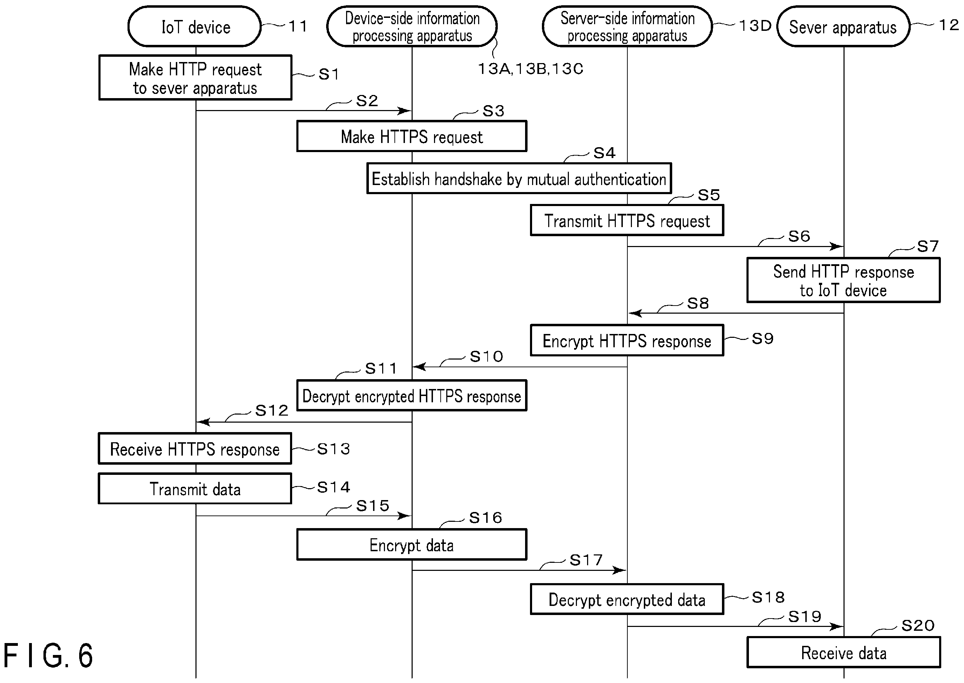

The control unit 61 includes, for example, a processor such as a CPU. The control unit 61 realizes various processes by causing the processor to execute a program. The control unit 61 comprehensively controls the communication management apparatus 14. The control unit 61 manages security information used for communications between the information processing apparatus 13 and another apparatus. For example, the control unit 61 mainly operates as a private certificate authority that authenticates the information processing apparatus 13 (13A, 13B, 13C, 13D). In the example shown in FIG. 6, the control unit 61 executes processing for realizing functions of a key generation unit 71, a certificate issuance unit 72, a certificate update unit 73, a certificate management unit 74 and a management unit 75, by causing the processor to execute programs.

The key generation unit 71 issues a private key corresponding to a public key included in a certificate described later, for example, based on an authentication request from the information processing apparatus 13 (13A, 13B, 13C, 13D).

For example, the certificate issuance unit 72 issues a certificate for certifying the validity of the information processing apparatus 13 (13A, 13B, 13C, 13D), based on the authentication request from the information processing apparatus 13 (13A, 13B, 13C, 13D). The certificate includes, for example, a public key and information indicating the owner of the information processing apparatus 13 (13A, 13B, 13C, 13D).

The certificate update unit 73 updates the certificate by setting a new expiration date for the certificate whose original expiration date has passed. The certificate update unit 73 issues a certificate in which the validity period is extended, for example, based on an update application from the information processing apparatus 13 (13A, 13B, 13C, 13D), and transmits the issued certificate to the information processing apparatus 13 (13A, 13B, 13C, 13D). Information indicating the issued certificate is received by the information processing apparatus 13 (13A, 13B, 13C, 13D) and stored in the certificate information storage unit 55 of the IC card 34 of the information processing apparatus 13 (13A, 13B, 13C, 13D), whereby the validity period of the certificate of the information processing apparatus 13 (13A, 13B, 13C, 13D) is extended.

The certificate management unit 74 manages certificates that have already been issued. The certificate management unit 74 performs, for example, a process of invalidating a certificate issued to the information processing apparatus 13 (13A, 13B, 13C, 13D) if the validity is not certified in the mutual authentication, due to the falsification or theft of the IC card 34 attached to the information processing apparatus 13 (13A, 13B, 13C, 13D) .

The certificate management unit 74 may respond to an inquiry from the information processing apparatus 13 (13A, 13B, 13C, 13D) to determine whether or not the certificate issued to the information processing apparatus 13 (13A, 13B, 13C, 13D) or to another communication apparatus is the one issued by the certificate issuance unit 72. In addition, the certificate management unit 74 may periodically check whether or not the issued certificate is being used by the legitimate information processing apparatus 13 (13A, 13B, 13C, 13D).

The management unit 75 manages the information processing apparatus 13 (13A, 13B, 13C, 13D). For example, the management unit 75 remotely controls, via the network NW, mutual authentication performed by the information processing apparatus 13 (13A, 13B, 13C, 13D).

The storage unit 62 includes a key information storage unit 81, a certificate information storage unit 82, and a communication setting storage unit 83. The key information storage unit 81 stores, for example, information indicating public keys or private keys that have already been issued. The certificate information storage unit 82 stores, for example, information indicating certificates that have already been issued. The key information storage unit 81 and the certificate information storage unit 82 are referenced, for example, in a case where the key generation unit 71 issues a private key and in a case where the certificate issuance unit 72 issues a certificate. The key information storage unit 81 stores information indicating private keys issued by the key generation unit 71. The certificate information storage unit 82 stores information indicating certificates issued by the certificate issuance unit 72.

The communication setting storage unit 83 stores communication setting information indicating communication settings to be applied (set) to each information processing apparatus 13. The communication setting information stored in the communication setting storage unit 83 includes a communication permission setting set in each device-side information processing apparatus 13. The control unit 61 may supply the communication setting information stored in the communication setting storage unit 83 in response to a request made by the information processing apparatus 13. For example, the control unit 61 may supply the communication setting information to the information processing apparatus 13 in response to the start-up of the information processing apparatus 13. The control unit 61 may supply the communication setting information to each information processing apparatus 13 in advance, in which case each information processing apparatus 13 stores the communication setting information in the storage unit 54 or the like. If, in the embodiment, the communication system 1 is configured to download (acquire) the communication setting information from the communication management apparatus 14 as necessary, the storage unit 62 does not have to include the communication setting storage unit 83 that stores the communication setting information.

Next, a description will be given of a communication process performed between the IoT devices 11 and the server apparatus 12 in the communication system 1.

FIG. 6 is a sequence chart illustrating an example of the processing performed by the communication system 1.

In a case where the IoT device 11 transmits data (data detected by the IoT device, captured data or the like) to the server apparatus 12, an HTTP request is first transmitted to the server apparatus 12 (step S1). The HTTP request transmitted by the IoT device 11 is acquired by the device-side information processing apparatus 13 (13A, 13B, 13C) (step S2).

The device-side information processing apparatus 13 acquires the HTTP request transmitted by the IoT device 11, and transmits an HTTPS request (ClientHello) to the server-side information processing apparatus 13D (step S3). In response to this, a handshake between the device-side information processing apparatus 13 and the server-side information processing apparatus 13D is started (step S4).

Specifically, the ClientHello transmitted by the device-side information processing apparatus 13 includes, for example, information indicating the version of TLS and information indicating a list of encryption methods and algorithms used for communications. The server-side information processing apparatus 13D transmits an HTTPS response (ServerHello) to the device-side information processing apparatus 13 as a response to the ClientHello. The ServerHello transmitted by the server-side information processing apparatus 13D includes, for example, information which the server apparatus 12 selects from among the options presented in the ClientHello. In other words, the server-side information processing apparatus 13D selects and determines a specific encryption algorithm for communications in response to the presentation from the device-side information processing apparatus 13.

Then, the server-side information processing apparatus 13D sends information necessary for the common key to be used for encrypted communications. The information necessary for the common key includes, for example, information indicating the public key and the certificate issued to the server apparatus 12 and information requesting the transmission of the public key and the certificate of the IoT device 11. The device-side information processing apparatus 13 sends the public key and certificate issued thereto and information necessary for the common key to be used for encrypted communications to the server-side information processing apparatus 13D.

Mutual authentication between the device-side information processing apparatus 13 and the server-side information processing apparatus 13D is performed, for example, as described below. The device-side information processing apparatus 13 generates a signature from the ServerHello or the like received until then, and transmits the signature to the server-side information processing apparatus 13D. The server-side information processing apparatus 13D verifies the signature received from the device-side information processing apparatus 13, based on the certificate received from the device-side information processing apparatus 13. If the verification is successful, the server-side information processing apparatus 13D determines that the certificate is none other than the certificate of the device-side information processing apparatus 13. The server-side information processing apparatus 13D generates a signature from the ClientHello and the like received until then, and transmits the signature to the device-side information processing apparatus 13. The device-side information processing apparatus 13 verifies the signature received from the server-side information processing apparatus 13D, based on the certificate received from the server-side information processing apparatus 13D. If the verification is successful, the device-side information processing apparatus 13 determines that the certificate is none other than the certificate of the server-side information processing apparatus 13D.

In a case where the mutual authentication between the device-side information processing apparatus 13 and the server-side information processing apparatus 13D is correctly performed, the device-side information processing apparatus 13 and the server-side information processing apparatus 13D generate and exchange common keys used for encryption.

If the public key and the certificate issued to the server apparatus 12 from the server-side information processing apparatus 13D are certificates allowed by the device-side information processing apparatus 13, the server-side information processing apparatus 13D ends the handshake provided that the public key and the certificate sent from the device-side information processing apparatus 13 are certificates allowed by the server-side information processing apparatus 13D.

In a case where the handshake with the device-side information processing apparatus 13 is established, the server-side information processing apparatus 13D transmits an HTTP request to the server apparatus 12 (step S5). The HTTP request is the HTTP request transmitted from the IoT device 11 in step S1.

The HTTP request transmitted from the server-side information processing apparatus 13D is received by the server apparatus 12 (step S6). At this time, the server apparatus 12 recognizes that the HTTP request is made by the IoT device 11. Therefore, the server apparatus 12 sends an HTTP response to the IoT device 11 (step S7). The HTTP response sent by the server apparatus 12 is acquired by the server-side information processing apparatus 13D (step S8).

The server-side information processing apparatus 13D encrypts the acquired HTTP response sent from the server apparatus 12, using a common key determined in the handshake in step S4 (step S9). The HTTP response encrypted by the server-side information processing apparatus 13D is received by the device-side information processing apparatus 13 via the network NW (step S10). The device-side information processing apparatus 13 decrypts the received HTTP response, using the common key (step S11). The HTTP response decrypted by the device-side information processing apparatus 13 is acquired by the IoT device 11 (step S12). The IoT device 11 receives the decrypted HTTP response (step S13). At this time, the IoT device 11 recognizes that the HTTP response is sent from the server apparatus 12. Therefore, the IoT device 11 transmits data to the server apparatus 12 (step S14).

The captured image data transmitted from the IoT device 11 is acquired by the device-side information processing apparatus 13 (step S15). The device-side information processing apparatus 13 encrypts the data transmitted from the IoT device 11, using the common key (step S16). The data encrypted by the device-side information processing apparatus 13 is received by the server-side information processing apparatus 13D via the network NW (step S17).

The server-side information processing apparatus 13D decrypts the received data, using the common key (step S18). Data decrypted by the server-side information processing apparatus 13D is acquired by the server apparatus 12 (step S19). The server apparatus 12 receives the decrypted data (step S20). At this time, the server apparatus 12 recognizes that the data from the IoT device 11 has been received.

If, in step S4 of the above flowchart, the mutual authentication between the device-side information processing apparatus 13 and the server-side information processing apparatus 13D is not correctly performed, the device-side information processing apparatus 13 does not permit communications with the communication destination. Specifically, the device-side information processing apparatus 13 does not output information transmitted from the communication destination to the IoT device 11. If the mutual authentication is not correctly performed, the communication destination may be an unauthorized communication apparatus that pretends to be the server-side information processing apparatus 13D. In this case, the device-side information processing apparatus 13 may transmit to the communication management apparatus 14, for example, a communication record indicating the mutual authentication is not correctly performed. Thus, the communication management apparatus 14 can acquire communication records indicating the mutual authentication is not correctly performed, and can grasp a pattern and a frequency of unauthorized communications with the device-side information processing apparatus 13 under management, thereby monitoring abnormality of the network.

The device-side information processing apparatus 13 may determine whether or not to permit communications with the communication destination, based on a transmission destination list indicating information on communication apparatuses that are permitted to communicate with the IoT devices 11, instead of the mutual authentication in the handshake performed in step S4 of the flowchart. The information on the communication apparatuses indicated in the transmission destination list is, for example, a uniform resource locator (URL). The control unit 30 of the device-side information processing apparatus 13 permits communications with the communication destination if the URL of the communication destination is a URL registered in the transmission destination list, and does not permit the communications if the URL is not registered in the transmission destination list.

The control unit 30 may update the transmission destination list. The control unit 30 stores, for example, URLs of communication destinations that are permitted to communicate with the IoT device 11 for a certain period of time and URLs of communication destinations that are not permitted to communicate with the IoT device 11 for the certain period of time. The control unit 30 updates the transmission destination list, for example, by checking the URLs registered in the transmission destination list and re-registering the URLs of the communication destinations with which communications were performed in the certain period of time. Alternatively, the device-side information processing apparatus 13 may transmit communication destination URLs to which communications were permitted for the certain period of time and communication destination URLs to which communications were not permitted, to the communication management apparatus 14. In this case, for example, the communication management apparatus 14 may update the transmission destination list, based on the communication destination URLs used for communications with the device-side information processing apparatus 13. The communication management apparatus 14 updates the transmission destination list in this manner, so that the communication management apparatus 14 can collectively manage communication apparatuses that communicate with the device-side information processing apparatus 13 under management.

The device-side information processing apparatus 13 may verify whether or not the content of the information transmitted to the IoT device 11 (e.g., a firmware update program) is correct after the handshake performed in step S4 is established. For example, in a case where the firmware update program of the IoT device 11 is transmitted via the network NW, the control unit 30 of the device-side information processing apparatus 13 performs verification, using a key for verification (verification key). In this case, the communication management apparatus 14 may transmit the verification key, for example, to each of the device-side information processing apparatus 13 and the server-side information processing apparatus 13D.

For example, the server-side information processing apparatus 13D generates a hash value from information (plain text) to be transmitted to the IoT device 11, and encrypts the generated hash value by use of the verification key. The server-side information processing apparatus 13D further encrypts the plain text and the encrypted hash value by use of the private key, and transmits the encrypted data to the IoT device 11. The device-side information processing apparatus 13 decrypts information, using the common key, and acquires the plain text and the encrypted hash value.

The device-side information processing apparatus 13 generates a hash value from the acquired plain text and decrypts the encrypted hash value by use of the verification key. In a case where the hash value generated from the plain text and the decrypted hash value are equal to each other, the device-side information processing apparatus 13 determines that the information transmitted to the IoT device 11 has correct contents. In this case, the device-side information processing apparatus 13 outputs the decrypted information (plain text) to the IoT device 11. On the other hand, in a case where the hash value generated from the plain text and the decrypted hash value are not equal to each other, the device-side information processing apparatus 13 determines that the information transmitted to the IoT devices 11 may be false information transmitted from a false communication apparatus pretending to be the server apparatus 12 or the server-side information processing apparatus 13D. In this case, the device-side information processing apparatus 13 does not output the decrypted information (plain text) to the IoT device 11.

Thus, the IoT device 11 can receive only information that has been verified to have correct contents. Normally, the IoT device 11 is made to determine whether or not the content of the update program is correct. However, the server-side information processing apparatus 13D can verify the content of the information transmitted to IoT device 11 on behalf of the IoT device 11, so that the processing burden on the IoT device 11 can be reduced.

As described above, the communication system 1 includes a device-side information processing apparatus 13 connected between the IoT devices 11 and the network NW, and a server-side information processing apparatus 13D connected between the server apparatus 12 and the network NW. The device-side information processing apparatus 13 encrypts information supplied from the IoT device 11 and transmits the encrypted information to the server-side information processing apparatus 13D via the network NW. In addition, the device-side information processing apparatus 13 decrypts information supplied via the network NW (information from the server apparatus 12 encrypted by the information processing apparatus 13D) and transmits the decrypted information to the IoT device 11. The server-side information processing apparatus 13D encrypts information from the server apparatus 12 and transmits the encrypted information to the device-side information processing apparatus 13 via the network NW. In addition, the server-side information processing apparatus 13D decrypts information from the network NW (information supplied from the IoT device and encrypted by the device-side information processing apparatus) and transmits the decrypted information to the server apparatus 12.

Thus, the communication system 1 can improve the safety of the social infrastructure system without making changes to the social infrastructure system. This is because HTTP protocol data (so-called plain text) transmitted from the IoT device 11 to the server apparatus 12 is replaced, for example, with HTTPS which is combined with the SSL/TLS protocol and has its safety improved, by the device-side information processing apparatus 13. Further, although the control data transmitted to the server apparatus 12 or the IoT devices 11 is encrypted, it is decrypted by the device-side information processing apparatus 13 and is received by the IoT device 11. Therefore, the IoT device 11 does not have to perform a decryption process, and an existing apparatus can be used as it is.

In the communication system 1, the device-side information processing apparatus 13A (13B, 13C) and the server-side information processing apparatus 13D perform mutual authentication, so that security can be improved as compared with a case where authentication is conducted in only one direction. In a general client terminal and a server apparatus, many unspecified client terminals communicate with the server apparatuses, so that it is not practical to issue valid client certificates to the many unspecified client terminals or to manage them properly. However, in a social infrastructure system to which a communication system is applied, the relationship between the IoT device 11 and the server apparatus 12 is clearly specified. Therefore, the device-side information processing apparatus 13 and the server-side information processing apparatus 13D can perform mutual authentication, and security can be improved thereby.

In general, a client terminal that does not have a client certificate may have to input an ID or a password issued by a server apparatus so as to communicate with the server apparatus. In order to maintain security in such password authentication, a password has to be a long character string in which characters and numerals are combined, or has to be changed regularly. However, as the number of passwords to be remembered increases, management becomes troublesome, and there have been cases where passwords leaked due to such an action as writing them down or letting a web browser remember them.

In contrast, in the communication system 1, the device-side information processing apparatus 13 possesses the client (device) certificate and can reliably perform mutual authentication with the server apparatus 12. Therefore, password authentication is not required. Thus, the user does not have to input a password or frequently update and manage the password, thereby improving user convenience. That is, safety can be maintained without imposing a burden on the user.

In a system in which a client terminal with no client certificate communicates with a server apparatus based on authentication using an ID or a password, anyone can communicate with the server apparatus if only the ID and the password are correctly input. Therefore, it may be possible to illicitly take over the client terminal and illicitly access the server apparatus. For example, there is a possibility of being infected with ransomware, where the functions of the client terminal are restricted by a server apparatus that has been illicitly taken over, and a ransom is demanded for release.

In contrast, in the communication system 1 described above, mutual authentication is performed between the IoT device 11 and the server apparatus 12 via the device-side information processing apparatuses 13A, 13B and 13C and the server-side information processing apparatus 13D, and thus the IoT device 11 and the server apparatus 12 cannot be illicitly taken over. That is, the communication system 1 can implement measures against ransomware.

For example, if there is an unmanaged terminal (also known as a rogue device) within the network, such a terminal may be illicitly taken over and utilized as an unauthorized terminal to conduct attacks such as malware. In contrast, in the communication system 1 described above, mutual authentication is performed between the IoT device 11 and the server apparatus 12 via the device-side information processing apparatus 13A (13B, 13C) and the server-side information processing apparatus 13D. Because of this, an unmanaged terminal within the network NW is prevented from being infected with malware or the like even if it is illicitly taken over and utilized for attacks.

In the communication system 1 described above, the server apparatus 12 is connected to the server-side information processing apparatus 13D, and an authentication process is not performed inside the server apparatus 12. Therefore, certificates etc. need not be held inside the server apparatus 12, and the server apparatus 12 connected to the server-side information processing apparatus 13D is clearly under the control of the communication management apparatus 14. In a case where the server apparatus 12 already has a functional unit corresponding to the server-side information processing apparatus 13D, the server-side information processing apparatus 13D does not have to be physically connected between the server apparatus 12 and the network NW. In this case, the authentication process with the device-side information processing apparatus 13 is performed by a functional unit corresponding to the server-side information processing apparatus 13D originally included in the server apparatus 12.

In the communication system 1, the control unit 401 of the IC card 34 is made to perform at least one of the mutual authentication and the encryption/decryption process. Therefore, the apparatus cost of the information processing apparatus 13 (13A, 13B, 13C, 13D) can be suppressed.

In connection with the communication system 1, a description was given of the case where the IC card 34 attached to the information processing apparatus 13 (13A, 13B, 13C, 13D) performs at least one of the mutual authentication and the encryption/decryption process. It should be noted, however, the configuration which the communication system 1 has for the mutual authentication and the encryption/decryption process is not limited to the IC card. The IC card 34 described above may be any functional unit as long as it has a storage function of storing a private key and a client certificate (or a server certificate) and a processing function of performing at least one of the mutual authentication and the encryption/decryption process. For example, the functional unit may be a SIM card having an IC chip mounted thereon, or may not be in the form of a card.

In the communication system 1, the IC card 34 of the information processing apparatus 13 is detachably attached to the information processing apparatus 13. In the communication system 1, the IC card 34 and the information processing apparatus 13 can be separated from each other. Therefore, if one of them needs to be replaced, only that one can be replaced. For example, in a case where the IC card 34 and the information processing apparatus 13 are formed as one piece, the entire information processing apparatus 13 has to be replaced even if only a portion corresponding to the IC card 34 is replaced. As compared to this case, the communication system 1 is advantageous in that the maintenance cost can be suppressed in a case where a specific portion included in the information processing apparatus 13, such as the IC card 34, is replaced.

The communication system 1 further comprises a communication management apparatus 14. This communication management apparatus 14 transmits a private key to be stored in the IC card 34 attached to the information processing apparatus 13, along with a client certificate, to the information processing apparatus 13, and transmits a private key to be stored in the IC card 34 attached to the server-side information processing apparatus 13D, along with a server certificate, to the server-side information processing apparatus 13D. Thus, the communication system 1 can perform handshake and determine a common key by using valid private keys and valid certificates issued by the communication management apparatus 14, and can not only produce the above-mentioned advantages but also further improve the safety of the social infrastructure system.

The configuration of the communication system 1 is not limited to the one described in connection with the above embodiment. For example, the information processing apparatus 13 may use a hardware security module (HSM) that implements the functions of the information processing apparatus 13 by hardware, based on a processing load. That is, the information processing apparatus 13 is not necessarily limited to the configuration in which the IC card is attached, as long as secure processing can be performed. The information processing apparatus 13 may be configured to use an IC chip or an IC module capable of realizing the required functions.

In the communication system 1, secure communications using the SSL/TLS protocol may be performed at all times, or whether or not to perform the communications using the SSL/TLS protocol may be selectable. Further, only one-directional communications of the bidirectional communications between the IoT device 11 and the server apparatus 12 may be performed using the SSL/TLS protocol. Further, secure communications using the SSL/TLS protocol may be performed at all times, or whether or not to perform the communications using the SSL/TLS protocol may be selectable.
By performing the communications using the SSL/TLS protocol at all times, it is possible to block communications from an apparatus different from the legitimate information processing apparatus 13 authenticated by the information processing apparatus 13. Therefore, unauthorized access to the IoT device 11 and the server apparatus 12 can be prevented, and the IoT device 11 and the server apparatus 12 can be prevented from being infected by malware.

In the communication system 1, the communications using the SSL/TLS protocol may be performed at all times, and unauthorized access to the IoT device 11 or the server apparatus 12 may be stored. In this case, a record of the unauthorized access may be transmitted to the communication management apparatus 14. The communication management apparatus 14 can recognize the presence or absence of unauthorized access, and can detect a premonition or indication of a large-scale attack on the entire system, enabling the implementation of countermeasures.

In the communication system 1, the information processing apparatus 13 may periodically check whether or not the connection with the IoT device 11 or the server apparatus 12 to which the information processing apparatus 13 is connected is maintained. In this case, information indicating the connection state may be transmitted to the communication management apparatus 14. In a case where information indicating the connection state cannot be received from the information processing apparatus 13, the communication management apparatus 14 determines that the information processing apparatus 13 is disconnected from the IoT device 11 or the server apparatus 12, and disables the disconnected information processing apparatus 13. In this manner, the communication management apparatus 14 prevents the disconnected information processing apparatus 13 from being illicitly connected to an unauthorized device and being used for spoofing.

In the communication system 1, the IC card 34 to be attached to the information processing apparatus 13 may incorporate a chip with high tamper resistance, which is called a secure element having CC (Common Criteria/IS015408) authentication. This chip can maintain a high level of security by storing a certificate containing a private key and a public key.

In the communication system 1, the program of the IoT device 11 may be updated by the server apparatus 12, the communication management apparatus 14 or the like, via the information processing apparatus 13. By updating the program (updating the firmware) via the information processing apparatus 13, the function of the IoT device 11 can be safely updated. In a case where the firmware is transmitted from the server apparatus 12 to the IoT device 11 in this manner, the firmware transmitted from the server apparatus 12 is provided, for example, with an encrypted signature of the server apparatus 12 by the server-side information processing apparatus 13D. In this case, the IoT device 11 can determine that the transmitted firmware is none other than the firmware transmitted from the server apparatus 12, by causing the information processing apparatus 13 to decrypt the signature. Thus, even if unauthorized firmware is transmitted to the IoT device 11 from an unauthorized terminal that pretends to be the server apparatus 12, the IoT device 11 is prevented from being erroneously updated based on the unauthorized firmware.

Since communications are performed via the information processing apparatus 13 in this manner, and the firmware can be safely updated in the IoT device 11 from the server apparatus 12, the communication management apparatus 14 or the like, the operator does not have to physically move to places where the plurality of IoT devices 11 are installed to perform the firmware update operation, and the operation cost can be reduced, accordingly.

In the communication system 1, the IoT device 11 may be activated or deactivated from the server apparatus 12, the communication management apparatus 14 or the like, via the information processing apparatus 13. Since the activation or deactivation (remote activation) is performed via the information processing apparatus 13, the function of the IoT device 11 can be safely updated, and secure remote control can be realized.

In connection with the communication system 1, a description was given of the case where the IoT device 11 and the server apparatus 12 communicate with each other by wired connection, but this case is not restrictive. At least one of the IoT device 11 and the server apparatus 12 may be an apparatus that performs wireless communications via a wireless LAN or the like. For example, in a case where the IoT device 11 wirelessly communicates with the server apparatus 12, the information processing apparatus 13, equipped with a wireless communication function, encrypts data transmitted from the IoT device 11, and wirelessly transmits the encrypted data to the server apparatus 12.

In the above, a description was given of the example in which the information processing apparatus 13 communicates with the server-side information processing apparatus 13D in the communication system 1, but the communication destination of the information processing apparatus 13 is not limited to this. For example, the information processing apparatus 13A may communicate with the information processing apparatus 13B. Upon reception of a communication start signal from the information processing apparatus 13B, the information processing apparatus 13A first performs mutual authentication with the information processing apparatus 13B to confirm that the information processing apparatus 13B is a valid communication terminal. In a case where the mutual authentication is correctly performed, the information processing apparatus 13A outputs information received from the information processing apparatus 13B to the IoT device 11. Since an encrypted authenticator is added to the transmission data, falsification of communication information can be detected and the sender can be identified.

As described above, in the communication system 1, it is possible to ensure "reception of unfalsified data" and "from a correct apparatus" in communications between the device-side information processing apparatus 13 and the server-side information processing apparatus 13D and in communications between the device-side information processing apparatuses 13.

Next, a description will be given of how a communication setting process of the information processing apparatus 13 is performed in the communication system 1 of the embodiment.

As described above, the communication system 1 of the embodiment has a function of detecting an unauthorized attack and blocking communications with an attacker. Further, each of the device-side information processing apparatuses 13 is provided with a device that enables communications according to communication permission setting. The information processing apparatus 13 executes a process of reflecting (setting) the communication permission setting during the start-up process.

If the information processing apparatus 13 executes link-up of all communication ports before the communication permission setting is reflected (in a state where the communication permission setting is not set), the device connected to the information processing apparatus 13 may be in a state where it can communicate with a device for which communications are not permitted in the communication permission setting, during the time until the communication permission setting is reflected. Even if the time until the communication permission setting is reflected is short, there may be a state in which communications are possible with the device for which communications are not permitted, posing a potential security vulnerability

Therefore, the communication system 1 according to the present embodiment enables the information processing apparatus 13 to observe the communication permission setting at all times, even during the start-up process of the information processing apparatus 13. In the description below, reference will be made to first to fourth examples of the communication setting process in which the information processing apparatus 13 performs communication setting while simultaneously observing the communication permission setting.

First, a description will be given of the first communication setting process which the device-side information processing apparatus 13 performs in the communication system 1 of the embodiment.

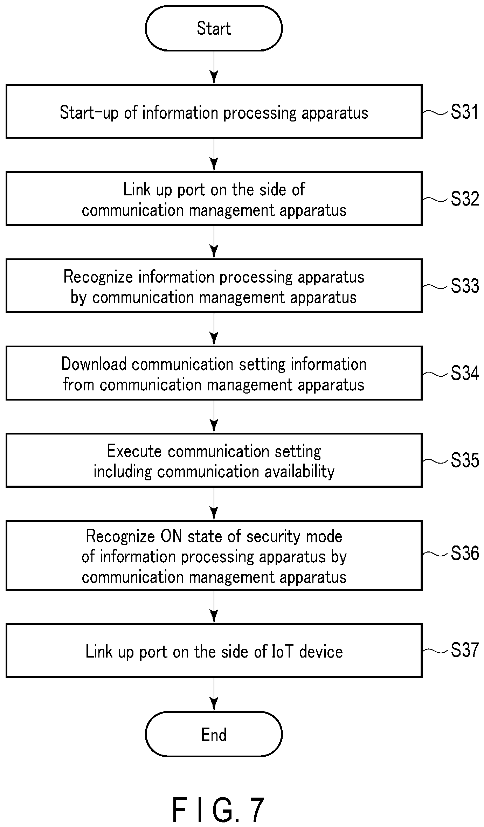

FIG. 7 is a flowchart for illustrating the first communication setting process which the device-side information processing apparatus 13 performs in the communication system 1 of the embodiment.

First, in response to the power-on, the control unit 30 of the information processing apparatus 13 initiates the start-up process (step S31). For example, an operator turns off the power supplied to the information processing apparatus 13 if the communication system 1 is out of the operation time, and turns on the power supply to the information processing apparatus 13 if the communication system 1 is in the operation time. In this case, the control unit 30 executes a start-up process for operating each unit in response to the power-on.

In response to the initiation of the start-up process, the control unit 30 links up the first port 21, which is a communication (LAN) port on the side of the communication management apparatus 14 (S32). The control unit 30 is communicatively connected to the communication management apparatus 14 via the switch 15, the gateway 17 and the network 18 by the first communication unit 31 including the first port 21.

The control unit 61 of the communication management apparatus 14 establishes communications with the information processing apparatus 13 that causes the NW communication unit 60 to execute the start-up process. In a case where the communications with the information processing apparatus 13 are established by the NW communication unit 60, the control unit 61 transmits a notification indicating the completion of the recognition of the information processing apparatus 13.

The control unit 30 of the information processing apparatus 13 confirms that the information processing apparatus is recognized by the communication management apparatus 14, based on the notification from the communication management apparatus 14 (S33). In a case where the control unit 30 confirms that the information processing apparatus 13 is recognized by the communication management apparatus 14, the control unit 30 downloads communication setting information applied to the information processing apparatus 13 from the communication management apparatus 14 (S34).

In the first communication setting process, it is assumed that the communication management apparatus 14 causes the communication setting storage unit 83 to hold communication setting information including a communication availability setting to be applied to each of the information processing apparatuses under management. For example, in a case where communication connection with a certain information processing apparatus 13 is established, the control unit 61 of the communication management apparatus 14 transmits the communication setting information to be applied to the information processing apparatus 13 together with a notification of the recognition completion. The control unit 61 of the communication management apparatus 14 may transmit the communication setting information in response to a request made by the information processing apparatus 13 after the notification of the recognition completion is transmitted. In this case, the control unit 30 of the information processing apparatus 13 may request the communication management apparatus 14 to transmit the communication setting information after the notification of the recognition completion is received from the communication management apparatus 14.

In a case where the control unit 30 of the information processing apparatus 13 acquires the communication setting information from the communication management apparatus 14, the control unit 30 executes the communication setting, based on the acquired communication setting information (S35). For example, the control unit 30 executes setting for disabling communications with the IoT device for which the communication disabled state is indicated by the communication setting information (the information processing apparatus connected to the IoT device). In a case where the setting including the communication availability with another device is completed, the control unit 30 of the information processing apparatus 13 notifies the communication management apparatus 14 that the security mode is turned on.

In a case where the control unit 61 of the communication management apparatus 14 receives the notification indicating that the security mode is turned on from the information processing apparatus 13 to which the communication setting information is transmitted, the control unit 61 transmits to the information processing apparatus 13 a notification indicating that the security mode is turned on.

The control unit 30 of the information processing apparatus 13 confirms that the communication management apparatus 14 recognizes that the security mode of the information processing apparatus 13 is turned on, based on the notification from the communication management apparatus 14 (S36). In a case where the control unit 30 of the information processing apparatus 13 confirms that the communication management apparatus 14 recognizes that the security mode is turned on, the control unit 30 links up the second port 22 which is a communication (LAN) port on the side of the IoT device 11 (S37). It should be noted that the control unit 30 of the information processing apparatus 13 may link up the second port 22 in response to the completion of the setting including the communication availability with each device, and notify the communication management apparatus 14 that the security mode is turned on.

In the first communication setting process as described above, the information processing apparatus acquires the communication setting information from the communication management apparatus at the time of start-up, sets a communication-disabled device in accordance with the communication setting information acquired from the communication management apparatus, and then links up a device-side port. Thus, the information processing apparatus does not have a time in which it is communicable with a communication-disabled device even at the time of start-up and observes the communication setting such as communication availability.

Next, a description will be given of the second communication setting process which the device-side information processing apparatus 13 performs in the communication system 1 of the embodiment.

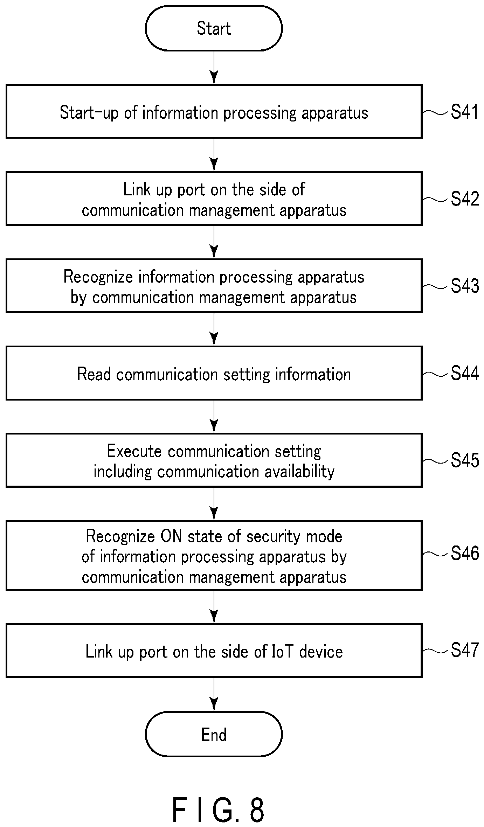

FIG. 8 is a flowchart for illustrating the second communication setting process which the device-side information processing apparatus 13 performs in the communication system 1 of the embodiment.

In the second communication setting process, it is assumed that the information processing apparatus 13 causes the storage unit 54 to store communication setting information including setting information indicating whether or not communications with each device are enabled. For example, the information processing apparatus 13 may cause the storage unit 54 to store communication setting information downloaded from the communication management apparatus 14 during operation. Further, the IC card 34 in which the communication setting information is written by use of an IC card reader/writer or the like may be attached to the information processing apparatus 13.

In response to the power-on, the control unit 30 of the information processing apparatus 13 initiates the start-up process (step S41). In response to the initiation of the start-up process, the control unit 30 links up the first port 21, which is a communication (LAN) port on the side of the communication management apparatus 14 (S42). The control unit 30 is communicatively connected to the communication management apparatus 14 via the switch 15, the gateway 17 and the network 18 by the first communication unit 31 including the first port 21.

The control unit 61 of the communication management apparatus 14 establishes communications with the information processing apparatus 13 that causes the NW communication unit 60 to execute the start-up process. In a case where the communications with the information processing apparatus 13 are established by the NW communication unit 60, the control unit 61 transmits a notification indicating the completion of recognition to the information processing apparatus 13.

The control unit 30 of the information processing apparatus 13 confirms that the information processing apparatus is recognized by the communication management apparatus 14, based on the notification from the communication management apparatus 14 (S43). In a case where the control unit 30 confirms that the information processing apparatus 13 has been recognized by the communication management apparatus 14, the control unit 30 reads the communication setting information stored in the storage unit 54 (S44).

In a case where the control unit 30 of the information processing apparatus 13 reads the communication setting information from the storage unit 54, the control unit 30 executes the communication setting, based on the read communication setting information (S45). For example, the control unit 30 executes setting for disabling communications with the IoT device for which the communication disabled state is indicated by the communication setting information (the information processing apparatus connected to the IoT device). In a case where the setting including the communication availability with another device is completed based on the communication setting information, the control unit 30 notifies the communication management apparatus 14 that the security mode is turned on.

In a case where the control unit 61 of the communication management apparatus 14 receives the notification indicating that the security mode is turned on from the information processing apparatus 13 to which the communication setting information is transmitted, the control unit 61 transmits to the information processing apparatus 13 a notification indicating that the security mode is turned on.

The control unit 30 of the information processing apparatus 13 confirms that the communication management apparatus 14 recognizes that the security mode is turned on, based on the notification from the communication management apparatus 14.

In a case where the control unit 30 of the information processing apparatus 13 confirms that the communication management apparatus 14 recognizes that the security mode is turned on, the control unit 30 links up the second port 22 which is a communication (LAN) port on the side of the IoT device 11 (S47). It should be noted that the control unit 30 of the information processing apparatus 13 may link up the second port 22 in a case where the setting including the communication availability is completed, and notify the communication management apparatus 14 that the security mode is turned on.

In the second communication setting process as described above, the information processing apparatus sets a communication-disabled device in accordance with the communication setting information stored in the storage unit at the time of start-up, and then links up a device-side port. Thus, the information processing apparatus does not have a time in which it is communicable with a communication-disabled device even at the time of start-up and observes the communication setting such as communication availability.

Next, a description will be given of the third communication setting process which the device-side information processing apparatus 13 performs in the communication system 1 of the embodiment.

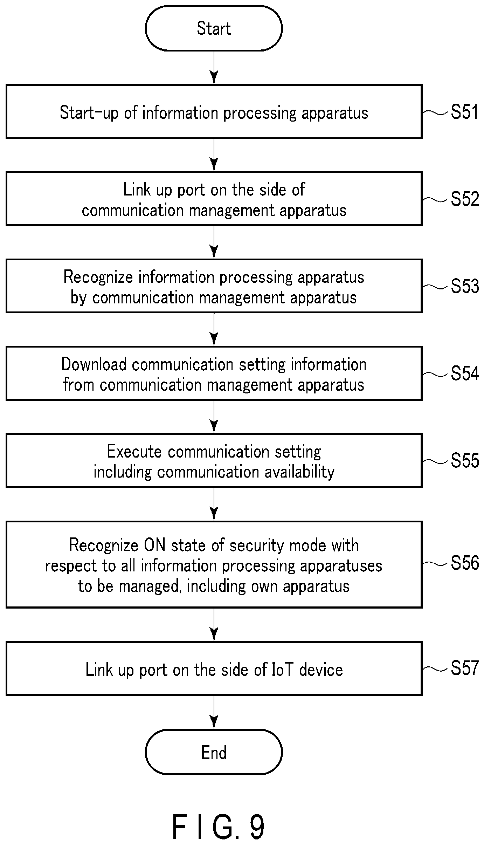

FIG. 9 is a flowchart for illustrating the third communication setting process which the device-side information processing apparatus 13 performs in the communication system 1 of the embodiment.

In the third communication setting process, it is assumed that a plurality of information processing apparatuses 13 are collectively managed as a target of the communication setting. The plurality of information processing apparatuses 13, which are a collective management target, are operated such that their power is turned on and off simultaneously. The communication management apparatus 14 manages information indicating the plurality of information processing apparatuses 13 that are to be collectively managed in the communication setting. In the third communication setting process, it is assumed that the communication setting information of the plurality of information processing apparatuses 13, which are the management target of the communication setting, is downloaded from the communication management apparatus 14.

In the configuration example shown in FIG. 1, it is assumed that the plurality of device-side information processing apparatuses 13A, 13B and 13C connected to the switch 15 are collectively managed as a target of the communication setting. The communication management apparatus 14 manages the information processing apparatuses 13A, 13B, and 13C as a management target of the collective communication setting, and further holds communication setting information to be set to the information processing apparatuses 13A, 13B and 13C.

In response to the power-on, the control unit 30 of each information processing apparatus 13 (13A, 13B, 13C) initiates the start-up process (step S51). In response to the initiation of the start-up process, the control unit 30 links up the first port 21, which is a communication (LAN) port on the side of the communication management apparatus 14 (S52). The control unit 30 is communicatively connected to the communication management apparatus 14 via the switch 15, the gateway 17 and the network 18 by the first communication unit 31 including the first port 21.

The control unit 61 of the communication management apparatus 14 establishes communications with the information processing apparatus 13 that causes the NW communication unit 60 to execute the start-up process. In a case where the communications with the information processing apparatus 13 are established by the NW communication unit 60, the control unit 61 transmits a notification indicating the completion of the recognition to the information processing apparatus 13.

The control unit 30 of each information processing apparatus 13 confirms that the information processing apparatus is recognized by the communication management apparatus 14, based on the notification from the communication management apparatus 14 (S53). In a case where the control unit 30 confirms that the information processing apparatus 13 is recognized by the communication management apparatus 14, the control unit 30 downloads communication setting information applied to the information processing apparatus 13 from the communication management apparatus 14 (S54).

In a case where the control unit 30 of each information processing apparatus 13 acquires the communication setting information from the communication management apparatus 14, the control unit 30 executes the communication setting based on the acquired communication setting information (S55). For example, the control unit 30 executes setting for disabling communications with the IoT device for which the communication disabled state is indicated by the communication setting information (the information processing apparatus connected to the IoT device). In a case where the setting including the communication availability with another device is completed based on the communication setting information, the control unit 30 notifies the communication management apparatus 14 that the security mode is turned on.

The control unit 61 of the communication management apparatus 14 transmits the communication setting information to each of the information processing apparatuses 13 to be managed, and receives a notification that the communication setting by each information processing apparatus 13 is completed (the security mode is turned on). In a case where the control unit 61 of the communication management apparatus 14 receives a notification of the completion of setting (the ON state of the security mode) from all information processing apparatuses 13 to be collectively managed by the communication setting, the control unit 61 transmits a notification indicating that the security modes of all information processing apparatuses 13 are recognized as being turned on, to each of the information processing apparatus 13 to be collectively managed by the communication setting.

The control unit 30 of each information processing apparatus 13 confirms that the communication management apparatus 14 recognizes that the security modes of all information processing apparatuses 13 to be collectively managed by the communication setting, including the own apparatus, have been turned on, based on the notification from communication management apparatus 14 (S56). In a case where the control unit 30 of each information processing apparatus 13 confirms that the communication management apparatus 14 recognizes that the security modes of all information management apparatuses 13 have been turned on, the control unit 30 links up the second port 22, which is a communication (LAN) port on the side of the IoT device 11 (S57) .

In the third communication setting process as described above, each information processing apparatus acquires communication setting information from the communication management apparatus at the time of start-up, sets a communication-disabled device in accordance with the communication setting information acquired from the communication management apparatus, and links up a device-side port after the communication settings in all information processing apparatuses to be managed including the own apparatus are completed.

Thus, each of the information processing apparatuses to be managed does not have a time in which it is communicable with a communication-disabled device even at the time of start-up and observes the communication setting such as communication availability. In addition, since each of the information processing apparatuses to be managed links up the device-side port after all of the plurality of information processing apparatuses to be managed complete the communication setting, security can be observed in the entirety of the plurality of information processing apparatuses to be managed, and the security property can be improved thereby.

Next, a description will be given of the fourth communication setting process which the device-side information processing apparatus 13 performs in the communication system 1 of the embodiment.

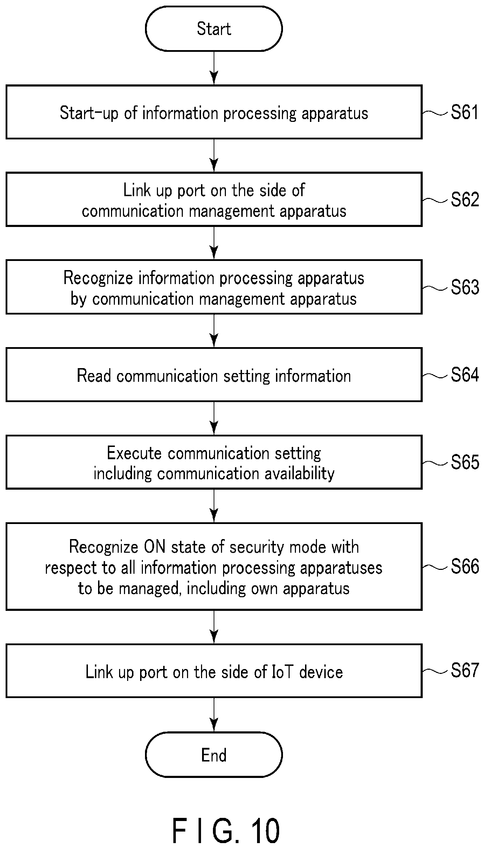

FIG. 10 is a flowchart for illustrating the fourth communication setting process which the device-side information processing apparatus 13 performs in the communication system 1 of the embodiment.

In the fourth communication setting process, it is assumed that a plurality of information processing apparatuses 13 are collectively managed as a target of the communication setting, as in the third communication setting process described above. In the fourth communication setting process, however, it is assumed that communication setting information is stored in the storage unit 54 of each information processing apparatus 13.

In the description to be given with reference to FIG. 10, it is assumed that the plurality of device-side information processing apparatuses 13A, 13B and 13C connected to the switch 15 in the configuration example shown in FIG. 1 are collectively managed by the communication setting, and that each of the information processing apparatuses 13A, 13B, and 13C holds communication setting information applied (set) to itself.

In response to the power-on, the control unit 30 of each of the information processing apparatuses 13 (13A, 13B, 13C) to be managed initiates the start-up process (step S61). In response to the initiation of the start-up process, the control unit 30 links up the first port 21, which is a communication (LAN) port on the side of the communication management apparatus 14 (S62). The control unit 30 is communicatively connected to the communication management apparatus 14 via the switch 15, the gateway 17 and the network 18 by the first communication unit 31 including the first port 21.

The control unit 61 of the communication management apparatus 14 establishes communications with the information processing apparatus 13 that causes the NW communication unit 60 to execute the start-up process. In a case where the communications with the information processing apparatus 13 are established by the NW communication unit 60, the control unit 61 transmits a notification indicating the completion of the recognition to the information processing apparatus 13.

The control unit 30 of each information processing apparatus 13 confirms that the information processing apparatus is recognized by the communication management apparatus 14, based on the notification from the communication management apparatus 14 (S63). In a case where the control unit 30 confirms that the information processing apparatus 13 has been recognized by the communication management apparatus 14, the control unit 30 reads the communication setting information stored in the storage unit 54 (S64).

In a case where the control unit 30 of the information processing apparatus 13 reads the communication setting information from the storage unit 54, the control unit 30 executes the communication setting based on the read communication setting information (S65). For example, the control unit 30 executes setting for disabling communications with the IoT device for which the communication disabled state is indicated by the communication setting information (the information processing apparatus connected to the IoT device). In a case where the setting including the communication availability with another device is completed based on the communication setting information, the control unit 30 notifies the communication management apparatus 14 that the security mode is turned on.

The control unit 61 of the communication management apparatus 14 transmits communication setting information to each of the information processing apparatuses 13 to be managed, and receives a notification indicating completion of the communication setting (the security mode is turned on) from each information processing apparatus 13. In a case where the control unit 61 of the communication management apparatus 14 receives a notification of the ON state of the security mode from all information processing apparatuses 13 to be collectively managed by the communication setting, the control unit 61 transmits a notification indicating that the security modes of all information processing apparatuses 13 are recognized as being turned on, to each of the information processing apparatuses 13.

The control unit 30 of each information processing apparatus 13 confirms that the communication management apparatus 14 recognizes that the security modes of all information processing apparatuses 13 to be collectively managed by the communication setting, including the own apparatus, have been turned on, based on the notification from communication management apparatus 14 (S66). In a case where the control unit 30 of each information processing apparatus 13 confirms that the communication management apparatus 14 recognizes that the security modes of all information management apparatuses 13 have been turned on, the control unit 30 links up the second port 22, which is a communication (LAN) port on the side of the IoT device 11 (S67).

In the fourth communication setting process as described above, the information processing apparatus sets a communication-disabled device in accordance with the communication setting information stored in the storage unit at the time of start-up, and links up a device-side communication port after the communication settings in all information processing apparatuses to be managed, including the own apparatus, are completed.

Thus, the information processing apparatus does not have a time in which it is communicable with a communication-disabled device even at the time of start-up and observes the communication setting such as communication availability. In addition, since each of the information processing apparatuses to be managed links up the device-side port after all of the plurality of information processing apparatuses to be managed complete the communication setting, security can be observed in the entirety of the plurality of information processing apparatuses to be managed, and the security property can be improved thereby.

While certain embodiments have been described, these embodiments have been presented by way of example only, and are not intended to limit the scope of the embodiments. Indeed, the novel embodiments described herein may be embodied in a variety of other forms; furthermore, various omissions, substitutions and changes in the form of the embodiments described herein may be made without departing from the spirit. The accompanying claims and their equivalents are intended to cover such forms or modifications as would fall within the scope and spirit.

## Claims

1. An information processing apparatus connected between a terminal device and a server apparatus that communicates with the terminal device via a network, the information processing apparatus comprising:
a first communication unit to be connected to the server apparatus via the network;
a second communication unit to be connected to the terminal device; and
a control unit that causes the first communication unit to link up to a communication management apparatus, and causes the second communication unit to link up to the terminal device after communication setting based on communication setting information indicating whether the terminal device is allowed to communicate with another terminal device is completed.

2. The information processing apparatus according to claim 1, wherein the control unit acquires communication setting information applied to the information processing apparatus from the communication management apparatus to which the first communication unit is linked up, and executes communication setting, based on the communication setting information acquired from the communication management apparatus.

3. The information processing apparatus according to claim 1, further comprising:
a storage unit that stores communication setting information applied to the information processing apparatus,
wherein the control unit executes communication setting, based on the communication management apparatus stored in the storage unit.

4. The information processing apparatus according to any one of claims 1 to 3, wherein the control unit causes the second communication unit to link up to a plurality of terminal devices to be managed, after communication settings in all information processing apparatuses connected to the terminal devices are completed.

5. The information processing apparatus according to claim 4, wherein the control unit causes the second communication unit to link up to the terminal devices after receiving, from the communication management apparatus, a notification indicating that communication settings have been completed in all of the information processing apparatuses connected to the plurality of terminal devices to be managed.

6. A communication system comprising:
a plurality of information processing apparatuses and a communication management apparatus,
wherein each of the information processing apparatuses includes:
a first communication unit to be connected to a server apparatus via a network;
a second communication unit to be connected to a terminal device that outputs information to be supplied to the server apparatus; and
a first control unit that causes the first communication unit to link up to the communication management apparatus, and causes the second communication unit to link up to the terminal device after communication setting is completed based on communication setting information indicating whether or not communications between the terminal device and another terminal device are enabled, and
wherein the communication management apparatus includes:
an NW communication unit that communicates with each of the information processing apparatuses via the network; and
a second control unit that manages security information used for communications which the NW communication unit performs between each of the information processing apparatuses and another apparatus.

7. The communication system according to claim 6,
wherein
the communication management apparatus further includes a storage unit that stores communication setting information applied to each of the information processing apparatuses, and
the second control unit of the communication management apparatus reads communication setting information applied to the information processing apparatuses with which the communications by the NW communication unit are established, and transmits the communication setting information to the information processing apparatuses, and
the first control unit of each of the information processing apparatuses acquires communication setting information from the communication management apparatus to which the first communication unit has linked up, and executes communication setting, based on the communication setting information acquired from the communication management apparatus.

8. The communication system according to claim 6,
wherein
each of the information processing apparatuses further includes a storage unit that stores communication setting information applied to each of the information processing apparatuses, and
the first control unit of each of the information processing apparatuses executes communication setting based on the communication setting information stored in the storage unit.

9. The communication system according to any one of claims 6 to 8, wherein
the second control unit of the communication management apparatus transmits a completion notification of communication setting to each of the information processing apparatuses to be managed, in a case where communication settings are recognized as being completed in all of the information processing apparatuses connected to the plurality of terminal devices to be managed, and
the first control unit of each of the information processing apparatuses causes the second communication unit to link up to the terminal devices, after receipt of the completion notification of communication setting indicating that communication settings have been completed in all of the information processing apparatuses connected to the plurality of terminal devices to be managed.
